# EUROPÄISCHE PATENTANMELDUNG

(11) **EP 1 136 101 A1**
(43) Veröffentlichungstag der Anmeldung: **26.09.2001**
(21) Anmeldenummer: 01105767.6
(22) Anmeldetag: 08.03.2001
(51) Int. Cl.: A62C 3/04, B08B 15/00

(54) **Entstauber, insbesondere zur Absaugung von Problemstäuben**

(30) Priorität: 13.03.2000 DE 20004490 U
(71) Anmelder: ESTA Apparatebau GmbH & Co. KG, D-89250 Senden-Ay (DE)
(72) Erfinder: Probst, Arnulf, 89281 Altenstadt (DE)
(74) Vertreter: Patentanwälte Ruff, Wilhelm, Beier, Dauster & Partner

(57) **Zusammenfassung**

Ein Entstauber, der insbesondere zur Absaugung von Problemstäuben in der Schuhindustrie eingesetzt wird, weist eine Brandschutzeinrichtung auf, die mindestens eine Ansaugöffnung hat, von der mindestens ein Ansaugkanal zu mindestens einer Auslaßöffnung führt. Es ist mindestens ein dem Ansaugkanal zugeordneter Funkensensor zur Erfassung der Beschaffenheit der durch den Ansaugkanal geführten staubhaltigen Luft und zur Abgabe eines Gefahrensignals sowie eine mit dem Sensor signalleitend verbundene Steuereinrichtung zur Einleitung einer trockenen Brandschutzmaßnahme als Antwort auf ein Gefahrensignal vorgesehen. Bei Auftreten eines Gefahrensignals, das z. B. durch angesaugte Funken ausgelöst wird, wird der Absaugkanal über eine Verschlußklappe, die mittels der Steuereinrichtung ansteuerbar ist, automatisch verschlossen.

## Beschreibung

Die Erfindung betrifft einen Entstauber, insbesondere zur Absaugung von Problemstäuben in der Schuhindustrie, mit mindestens einer Eingangsöffnung zur Absaugung von staubhaltiger Luft, mindestens einer Saugeinrichtung zur Erzeugung eines Unterdrucks an der Eingangsöffnung des Entstaubers, mindestens einer Filtereinrichtung zur Reinigung der angesaugten staubhaltigen Luft und mindestens einer Ausblasöffnung zum Ausblasen gereinigter Luft.

Entstauber bzw. Staubabsauganlagen werden überwiegend zur Absaugung von Stäuben und anderen staubähnlichen Bearbeitungsrückständen in Industrie und Handwerk eingesetzt. Typische Anwendungsbereiche sind die Lederwaren- und Schuhherstellung, Dentallabors und kunststoffverarbeitende Betriebe. Beim Abschleifen von Gummi und Leder in der Schuhindustrie können sehr zähe Stäube entstehen, die aus mehreren Gründen in der Weiterverarbeitung problematisch sind. Zum einen neigen diese Stäube dazu, bei den verwendeten Entstaubern die Filterporen der verwendeten Filtereinrichtungen schnell zu verschließen. Ein weiteres Problem besteht darin, daß bei bestimmten Produktionsprozessen Funken entstehen können, die den häufig leicht entzündbaren Staub entzünden können. Ein daraus entstehender Brand könnte einen Entstauber leicht unbrauchbar machen.

Im Hinblick auf diese Problematik werden herkömmlich häufig Naßabschneider eingesetzt, die über eine fest installierte Rohrleitung mit den Bearbeitungsmaschinen, z. B. Schleifmaschinen, verbunden sind. Bei Naßabschneidern erfolgt die Filtration des angesaugten Fördergutes mittels eines Wasserbades, so daß bei Ansaugung von Funken bzw. glimmenden Partikeln diese bei Auftreffen auf das Filtermedium gelöscht werden können. Nachteilig bei Naßabschneidern sind vor allem die hohen Anschaffungs- und Betriebskosten sowie die sehr aufwendige und problematische Entsorgung des Wassers und des Schlammes. Meist müssen die Geräte wegen ihrer Baugröße, der schlechten Filterleistung und der hohen Luftfeuchtigkeit der Abluft sowie des immer noch hohen Brandrisikos im Freien aufgestellt werden. Kommt es zu einer Umgruppierung der Verarbeitungsmaschinen, beispielsweise aufgrund einer Produktionsänderung, so werden üblicherweise nur die Stichrohrleitungen zu den Bearbeitungsmaschinen angepaßt, während die Hauptrohrleitung unverändert bleibt. Dadurch kann es hier zu Staubablagerungen kommen, die sich entzünden und zu Bränden in den Rohrleitungen führen können.

Der Erfindung liegt die Aufgabe zugrunde, einen Entstauber zu schaffen, der bei günstigen Herstellungskosten einen zuverlässigen Brandschutz gewährleistet.

Zur Lösung dieser Aufgabe schlägt die Erfindung einen Entstauber mit den Merkmalen von Anspruch 1, sowie eine Brandschutzeinrichtung mit den Merkmalen von Anspruch 14 vor. Vorteilhafte Weiterbildungen sind in den abhängigen Ansprüchen angegeben, deren Wortlaut durch Bezugnahme zum Inhalt der Beschreibung gemacht wird.
Ein erfindungsgemäßer Entstauber hat eine Brandschutzeinrichtung mit mindestens einer Ansaugöffnung, von der mindestens ein Ansaugkanal zu mindestens einer Auslaßöffnung führt. Die Ansaugöffnung kann beispielsweise direkt oder über eine geeignete Rohrleitung an eine Bearbeitungsmaschine angeschlossen werden. Dem Absaugkanal ist mindestens ein Sensor zur Erfassung der Beschaffenheit der durch den Ansaugkanal geführten staubhaltigen Luft und zur Abgabe mindestens eines Gefahrensignales zugeordnet, das charakteristisch für die beobachtete Beschaffenheit der staubhaltigen Luft ist und immer dann ausgelöst wird, wenn die Luft Funken bzw. heiße oder glimmende Partikel enthält. Als staubhaltige Luft im Sinne dieser Anmeldung wird Fördergut verstanden, das Luft, Dämpfe, Feststoffpartikel, Aerosolpartikel, Gase o. dgl. enthalten kann. Das Gefahrensignal kann auch als Funkensignal bezeichnet werden. Eine mit dem funkensensitiven Sensor in signalleitender Verbindung stehende Steuereinrichtung ist so ausgelegt, daß sie als Antwort auf ein Gefahrensignal eine oder mehrere geeignete trockene Brandschutzmaßnahmen einleitet. Eine "trockene" Brandschutzmaßnahme im Sinne dieser Anmeldung verzichtet auf die Verwendung von Wasser oder anderen flüssigen, pulverförmigen und/oder gasförmigen Löschmitteln, durch deren Einsatz die Brandschutzeinrichtung und/oder der Entstauber kontaminiert und ggf. zumindest zeitweise unbrauchbar gemacht werden könnte. Daher kann der Entstauber schon kurze Zeit nach einer Gefahrensituation wieder in Betrieb genommen werden. Die Produktionsabläufe werden also kaum gestört, kostspielige Produktionsausfälle werden vermieden.

Durch die Brandschutzeinrichtung kann also eine Prüfstrecke geschaffen werden, durch die angesaugtes Material hindurchlaufen muß, bevor es in nachgeschaltete Bereiches eines Entstaubers, insbesondere in die Filtereinrichtung, eintreten kann. Innerhalb der Prüfstrecke wird der angesaugte Staub automatisch auf Gefährlichkeit für den Betrieb des Entstaubers geprüft. Liegen durch den Sensor erfaßbare Anzeichen für eine Gefahr vor, führen diese automatisch zur Einleitung von löschmittelfreien Schutzmaßnahmen. Die Wächterfunkton der Brandschutzeinrichtung ermöglicht es, daß die Filtereinrichtungen im Hinblick auf ihre Filteraufgabe optimiert werden können, ohne daß brandhemmende oder -hindernde Eigenschaften vorgesehen sein müssen. Solange keine potentiell gefährlichen Materialien angesaugt werden, wird der Betrieb des Entstaubers durch die Brandschutzeinrichtung praktisch nicht beeinträchtigt.

Die Brandschutzeinrichtungen können in entsprechend gefährdete Entstauber integriert sein, beispielsweise derart, daß die Ansaugöffnung gleichzeitig als Eingangsöffnung des Entstaubers dient und daß die Auslaßöffnung des Ansaugkanales unmittelbar oder über ein Leitungsstück in eine Filtereinrichtung des Entstaubers mündet. Bei einer bevorzugten Weiterbildung ist die Brandschutzeinrichtung als gesonderte Baueinheit ausgebildet, die derart an einem Entstauber anbringbar ist, daß die Auslaßöffnung des Ansaugkanals mit einer Einsaugöffnung des Entstaubers kommuniziert. Vorzugsweise ist die Brandschutzeinrichtung beispielsweise durch Anschrauben und/oder Einhängen lösbar an dem Entstauber anbringbar. Dadurch sind herkömmliche Entstauber jederzeit mit erfindungsgemäßen Brandschutzeinrichtungen nachrüstbar, falls eine spätere Umstellung der Produktionsmaschinen dies erfordert. Bei Verarbeitung von ungefährlichen Stäuben kann die Brandschutzeinrichtung auf einfache Weise wieder abgenommen werden.

Die Sensoreinrichtung, die ein oder mehrere nach gleichen oder unterschiedlichen Prinzipien arbeitende Sensorelemente haben kann, umfaßt vorzugsweise mindestens einen in den Ansaugkanal gerichteten optischen Sensor. Hierdurch können besonders schnelle Ansprechzeiten realisiert werden. Vorzugsweise ist mindestens ein wärmeempfindlicher Sensor, insbesondere ein Infrarotsensor vorgesehen, um glühende, glimmende oder sonstwie gefährlich erhitzte Partikel oder Funken schnell und sicher zu erkennen und beispielsweise dann ein Gefahrensignal abzugeben, wenn die Temperatur des "Funkens" ca. 400°C übersteigt.

Zweckmäßig ist die Sensoreinrichtung so angeordnet und ausgebildet, daß ihr räumlicher Arbeitsbereich im wesentlichen den gesamten Durchlaßquerschnitt des Ansaugkanales erfaßt, so daß kein Funke unerkannt den Bereich der Sensoreinrichtung passieren kann.

Besonders vorteilhaft sind Ausführungsformen, bei denen der Ansaugkanal derart mindestens abschnittsweise gekrümmt ausgebildet ist, daß er eine Absaugkanallänge hat, die deutlich größer ist als ein direkter Abstand zwischen Ansaugöffnung und Auslaßöffnung. Insbesondere kann die Ansaugkanallänge mehr als zweimal, insbesondere zwischen zwei- und fünfmal so groß sein wie dieser direkte Abstand. Dies kann beispielsweise durch einen labyrinthartigen Verlauf des Absaugkanals erreicht werden, bei dem dieser beispielsweise ein- oder mehrmals U-förmig gestaltet sein kann. Dadurch lassen sich bei kompakten Außenmaßen der Brandschutzeinrichtung vorteilhaft große Absaugkanallängen schaffen, die es insbesondere ermöglichen, die Sensoreinrichtung mit entlang des Strömungsweges großem Abstand zur Auslaßöffnung anzubringen, um zwischen Detektion eines Funkens o. dgl. und einer Brandschutzmaßnahme soviel Zeit zu lassen, daß ein Funken nicht bis zur Auslaßöffnung gelangen kann.

Eine bevorzugte, anhand eines Ausführungsbeispiels später näher erläuterte Weiterbildung hat mindestens ein Verschlußorgan für den Absaugkanal, das mittels der Steuereinrichtung so ansteuerbar ist, daß es den Absaugkanal bei Auftreten eines Gefahrensignals verschließt bzw. absperrt. Obwohl auch eine Absperrung des Absaugkanals stromaufwärts der Sensoreinrichtung zu einem Abbrechen der Strömung im Ansaugkanal und somit zu einer Unterbrechung des Materialtransportes darin führen kann, ist das Verschlußorgan vorzugsweise stromabwärts der Sensoreinrichtung angeordnet, insbesondere im Bereich der Auslaßöffnung. Dabei sind zweckmäßig ein entlang des Strömungsweges gemessener Abstand zwischen der Sensoreinrichtung und dem Verschlußorgan und eine zur Absperrung des Absaugkanals erforderliche Verschließzeit des Verschlußorganes an die mittlere Strömungsgeschwindigkeit im Absaugkanal derart angepaßt, daß der Absaugkanal vor Eintreffen eines den Verschluß auslösenden Partikels am Verschlußorgan verschließbar ist. Damit wird ein Eindringen von möglicherweise gefährlichen Staubpartikeln in den der Auslaßöffnung nachgeschalteten Bereich zuverlässig verhindert. Alternativ wäre es z. B. auch möglich, durch ein steuerbares Umlenkorgan das den Funken tragende Fördergut bei Auftreten eines Gefahrensignals aus dem Ansaugkanal auszukoppeln bzw. auszuleiten, z. B. in einen gesonderten Auffangraum.

Um auch bei den im Hinblick auf große Absaugleistungen erforderlichen hohen Strömungsgeschwindigkeiten von typischerweise 20 m/s oder mehr einen zuverlässigen Verschluß des Absaugkanals zu gewährleisten, ist vorzugsweise ein Schnellverschluß vorgesehen, bei dem das Verschließorgan nach Auftreten eines den Verschließvorgang einleitenden Signals innerhalb von weniger als 0,2 Sekunden in seine Schließstellung überführt wird, wobei meist noch schnellere Verschließzeiten von weniger als 0,1 Sekunden, insbesondere ca. 0,08 Sekunden erreicht werden können. Dies fördert einen kompakten Aufbau der Einrichtung, da der Strömungsweg zwischen Sensoreinrichtung und Verschlußbereich relativ kurz gehalten werden kann, beispielsweise weniger als 1 m lang.

Zweckmäßig ist das Verschlußorgan als verschwenkbare Verschlußklappe ausgebildet, die insbesondere derart angeordnet sein kann, daß eine Schließbewegung der Verschlußklappe durch die Strömung im Absaugkanal beschleunigbar bzw. verstärkbar ist. Die durch die Ansaugeinrichtung des Entstaubers bereitgestellten Strömungskräfte werden also in zweckmäßiger Weise für ein schnelles Verschließen des Verschlußorganes genutzt. Zweckmäßig ist, alternativ oder zusätzlich, ein durch die Steuereinrichtung ansteuerbarer Stellantrieb für das Verschlußorgan vorgesehen, der bei einer bevorzugten Ausführungsform elektropneumatisch arbeitet. Es kann auch ein Verschlußorgan in Form eines Schiebers vorgesehen sein, der z. B. in Schließrichtung mechanisch o. dgl. vorgespannt ist und bei Auftreten eines Gefahrensignals in die Schließstellung schnellt.

Weitere vorteilhafte Weiterbildungen werden im Zusammenhang mit einem Ausführungsbeispiel näher erläutert. Diese umfassen insbesondere die automatische Abschaltung einer Saugeinrichtung des Entstaubers, beispielsweise eines Ventilators, als Antwort auf ein Gefahren anzeigendes Gefahrensignal sowie vorteilhafte Möglichkeiten zur Entfernung von funkenbelastetem Absauggut aus dem Absaugkanal und zur optischen Inspektion des Absaugkanals nach Auftreten eines Gefahrensensorsignals. Hierzu weist der Absaugkanal vorteilhaft geeignet dimensionierte und angebrachte Öffnungen auf, die durch Verschlußorgane wie Türen, Klappen o. dgl. im Betrieb der Brandschutzeinrichtung verschlossen sind und bei Bedarf geöffnet werden können, um Zugang zum Inneren des Absaugkanals zu ermöglichen.

Zur Absaugung der staubbeladenen Luft kann eine schräg nach unten gerichtete Absaugleitung eingesetzt werden, die in die Eingangsöffnung des Entstaubers, insbesondere in die Ansaugöffnung der Brandschutzeinrichtung mündet. Die Absaugleitung ist bevorzugt ein Absaugrohr mit mindestens einem Ansaugstutzen an seinem Absaugende. Die Innenwandung der Absaugleitung hat zweckmäßig eine geringe Haftfähigkeit für Staub und/oder glühende Partikel. Durch die Schräge der Rohrleitung und eine glatte Innenwandung wird das Ablagern von Stäuben o. dgl. in der Rohrleitung verhindert, d. h. Partikel, die auf die Innenwandung fallen, rutschen zum Absaugende der Rohrleitung und nicht in den Entstauber. Um das Anbacken von glimmenden bzw. glühenden Partikeln zu verhindern, ist die Innenwandung der Rohrleitung vorzugsweise feuerbeständig. Dies kann beispielsweise durch Verzinken o. dgl. der Rohrleitung erreicht werden.

Besonders vorteilhaft ist es, wenn die Filtereinrichtung des Entstaubers sowohl zur Filterung von Staub als auch zur Filterung von insbesondere geruchsbelastenden Dämpfen ausgebildet ist. Vorzugsweise wird zur Filterung des Staubs ein zur Staubfilterung optimierter Filter verwendet. Dies ist vorzugsweise ein Oberflächenfilter, bei dem sich der Staub an der Filteroberfläche als Staubkuchen ansammelt. Es sind dabei Ausführungsformen denkbar, bei denen die Filter nach einer gewissen Zeit mechanisch oder durch dementsprechende Zufuhr von Druckluft abgereinigt werden, beispielsweise können dies Filterpatronen sein. Es ist aber auch möglich, Einmal-Filter zu verwenden, die mitsamt dem abgefilterten Staub entsorgt werden. Beispielsweise können dies Filterbeutel aus Papier oder ähnlichen Materialien nach Art eines Staubsaugerbeutels sein. Zur Filterung der Dämpfe können ein oder mehrere für die Dampffilterung optimierte Filter eingesetzt werden. Bevorzugt sind dies Tiefenfilter, bei denen beispielsweise Aerosolpartikel durch Abscheidung an den Fasern im Innern des Tiefenfilters herausgefiltert werden. Als Tiefenfilter können beispielsweise Filtersäcke aus geeigneten Materialien, wie Baumwolle, Kunstfasern oder Baumwoll-Kunstfasermischungen eingesetzt werden. Durch die Herausfilterung eines Großteils der Dämpfe wird eine enorme Minderung der Geruchsbelastung erreicht. Besonders bevorzugt erfolgt die Filterung der staubhaltigen Luft stufenweise. Zunächst wird durch eine hierfür optimierte erste Filtereinheit der Staub gefiltert, und dann werden durch eine gesonderte, hierfür optimierte zweite Filtereinheit die Dämpfe herausgefiltert.

Dem Entstauber kann eine Reinigungsvorrichtung zugeordnet sein, die lösbar am Entstauber befestigt wird. Bevorzugt wird die Reinigungsvorrichtung, insbesondere ein Schlauch des Reinigungsgerätes, an der Filtereinrichtung des Entstaubers angebracht. Somit entsteht eine Art Staubsauger, mit dem der Arbeitsbereich nachträglich gereinigt werden kann. Der abgesaugte Schmutz bzw. Staub gelangt dann direkt in den oder die Staubfilter der Filtervorrichtung. Bevorzugt besitzt die Reinigungsvorrichtung mindestens eine Flächenreinigungsdüse, mit der der Boden bzw. Arbeitsflächen wie Tische o. dgl. des Arbeitsbereiches bequem großflächig gereinigt werden können.

Weiter umfaßt die Erfindung eine Brandschutzeinrichtung mit den Merkmalen des Anspruches 14. Bezüglich näherer Details der Brandschutzeinrichtung wird auf die vorhergehende Beschreibung verwiesen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können.

Ein Ausführungsbeispiel der Erfindung ist in den Zeichnungen dargestellt und wird im folgenden näher erläutert. In den Zeichnungen zeigen:
- Fig. 1: eine perspektivische Teilansicht einer ersten Ausführungsform eines kompakten Entstaubers, an dessen Rückseite eine bevorzugte Ausführungsform einer Brandschutzeinrichtung angebracht ist,
- Fig. 2: eine Draufsicht auf die Breitseite der in Fig. 1 gezeigten Brandschutzeinrichtung,
- Fig. 3: eine Draufsicht auf eine im Betrieb der Vorrichtung durch eine Tür verschließbare Schmalseite der Brandschutzeinrichtung aus Fig. 2,
- Fig. 4: eine teilweise geschnittene Seitenansicht einer zweiten Ausführungsform des Entstaubers und
- Fig. 5: eine Draufsicht auf die zweite Ausführungsform des Entstaubers.

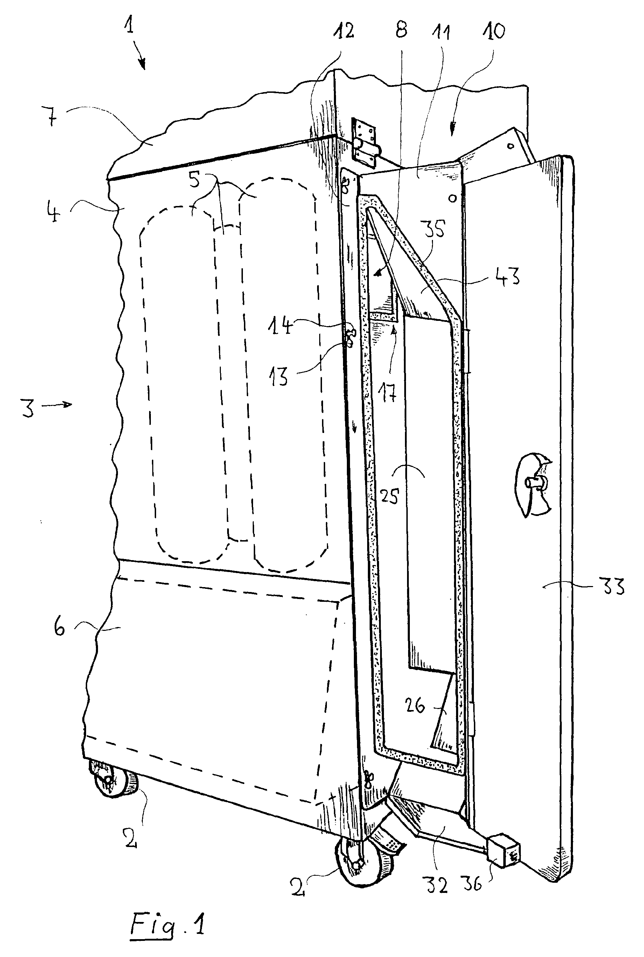

In Fig. 1 ist in schrägperspektivischer Ansicht ein Ausschnitt einer Seitenwand sowie einer Rückwand einer ersten Ausführungsform eines verfahrbaren Kompaktentstaubers 1 für Problemstäube gezeigt, der besonders für den Einsatz in der Schuhindustrie ausgestattet ist. In einem auf feststellbaren Rollen 2 stehenden, weniger als mannshohen, kastenförmigen Gehäuseunterteil 3 befindet sich eine Filterkammer 4 mit mehreren zylindrischen Filterpatronen 5, die insgesamt eine Filterfläche von ca. 10 m² bereitstellen. Die Filterflächen der Filterpatronen bestehen aus einem Material, das sich auch unter extremen Bedingungen, beispielsweise bei Gummi- und Lederstäuben sowie Kleberesten, problemlos abreinigen läßt. Eine vollautomatische pneumatische Abreinigung erfolgt zeit- und differenzdruckgesteuert, so daß die aufgefangenen Partikel die Filter nicht verkleben können. Die Filterelemente sind zudem so gestaltet, daß sie durch die anströmende Luft zu Eigenschwingungen angeregt werden. Durch diese Eigenschwingungen wird eine kontinuierliche, gewisse Selbstreinigung der Filterpatronen gefördert. Bei dieser weitgehend wartungsfrei arbeitenden Filtereinrichtung ist ein Austausch der Filterelemente nicht erforderlich.

Unterhalb der Filterkammer 4 befindet sich eine große Staubsammelschublade 6, deren großes Aufnahmevolumen dafür sorgt, daß bei üblichem Staubanfall eine Entleerung nur einmal pro Arbeitsschicht erfolgen muß, so daß während der Schicht unterbrechungsfrei gearbeitet werden kann.

Zur Ansaugung ist im abklappbaren Gehäuseoberteil 7 ein über einen 3-kW-Motor angetriebener Ventilator vorgesehen, der in der Lage ist, einen effektiven Volumenstrom von bis zu 1.850 m³/h zu erzeugen.

Zum Anschluß der zu bedienenden Bearbeitungsmaschinen an den Entstauber hat dieser in dem Bereich der Filterkammer 4 an seiner Rückseite eine rechteckige Ansaugöffnung 8, in deren Bereich normalerweise ein zylindrischer Schlaußanschlußstutzen zum Anschluß eines zu den Bearbeitungsmaschinen führenden Saugschlauches angebracht ist.

Dieser Ansaugöffnung 8 ist in Strömungsrichtung eine bevorzugte Ausführungsform einer erfindungsgemäßen Brandschutzeinrichtung 10 vorgeschaltet. Die Brandschutzeinrichtung hat ein generell quaderförmiges, aus Stahlblech gefertigtes flaches Gehäuse 11 mit einem ebenen, an die Rückseite des Entstaubers 1 anlegbaren Montageblech 12, in dem mehrere schlüssellochförmige Einhängeöffnungen 13 vorgesehen sind. An der Rückseite des Entstauberunterteils 3 sind in entsprechender räumlicher Anordnung mit breiten Köpfen versehene Einhängbolzen 14 vorgesehen, so daß die Brandschutzeinrichtung direkt an der Rückseite des Entstaubers einhängbar und ggf. ohne weitere Maßnahmen befestigbar ist. Die Brandschutzeinrichtung ist also jederzeit nachrüstbar, falls für einen Entstauber durch Umstellung der Produktion die Anbringung einer Brandschutzeinrichtung zweckmäßig erscheint.

Das im wesentlichen luftdicht abschließbare, flachkastenförmige Gehäuse 11 hat an der in Fig. 1 nicht sichtbaren hinteren Schmalseite etwa auf halber Höhe eine mit einem Schlauchanschlußstutzen 15 umschlossene Ansaugöffnung 16 und eine im Oberbereich des Montageblechs 12 vorgesehene Auslaßöffnung 17, die bei eingehängter Brandschutzeinrichtung direkt im Bereich der Ansaugöffnung 8 des Entstaubers liegt und mit dieser, im wesentlichen luftdicht gegen die Umgebung abgedichtet, kommuniziert. Von der Ansaugöffnung 18 führt ein im wesentlichen U-förmig verlaufender Ansaugkanal 18 im Gehäuse 11 zur Auslaßöffnung 17. Der Ansaugkanal 18 hat überwiegend einen etwa rechteckigen Strömungsquerschnitt, der die Größenordnung des Durchlaßquerschnittes der Ansaugöffnung 8 des Entstaubers bzw. der Ansaugöffnung 16 der Brandschutzeinrichtung liegt. Der Ansaugkanal hat zwei im Betriebszustand im wesentlichen vertikal parallel zueinander verlaufende Kanalabschnitte 19, 20, die über einen unteren Umlenkabschnitt 21 miteinander verbunden sind, in dessen Bereich eine Umkehr der Strömungsrichtung um ca. 180° stattfindet. Dieser labyrinthartig gekrümmte Verlauf des Ansaugkanales wird auf einfache Weise dadurch erreicht, daß in das Gehäuse 11 mittig zwischen dessen Schmalseiten 22, 23 eine nicht bis zur Unterseite 24 des Gehäuses durchgehende Zwischenwand 25 eingeschweißt ist. Zur Vermeidung der Ausbildung von toten Räumen sind die Eckbereiche des dadurch entstehenden, U-förmigen Raumes durch um 45° angeschrägte, eingeschweißte Schrägbleche 26 abgedeckt. Die Kanalführung ist insgesamt so, daß der zu durchlaufende Strömungsweg zwischen Einlaß 16 und Auslaß 17 etwa zwei- bis dreimal so lang ist wie der direkte räumliche Abstand zwischen Einlaß 16 und Auslaß 17. Im Bereich oberhalb der Ansaugöffnung 16 ist neben der Auslaßöffnung ein im wesentlichen rechteckiger Aufnahmeraum 27 gebildet, in dem eine gestrichelt angedeutete Steuereinrichtng 29 der Brandschutzeinrichtung untergebracht ist.

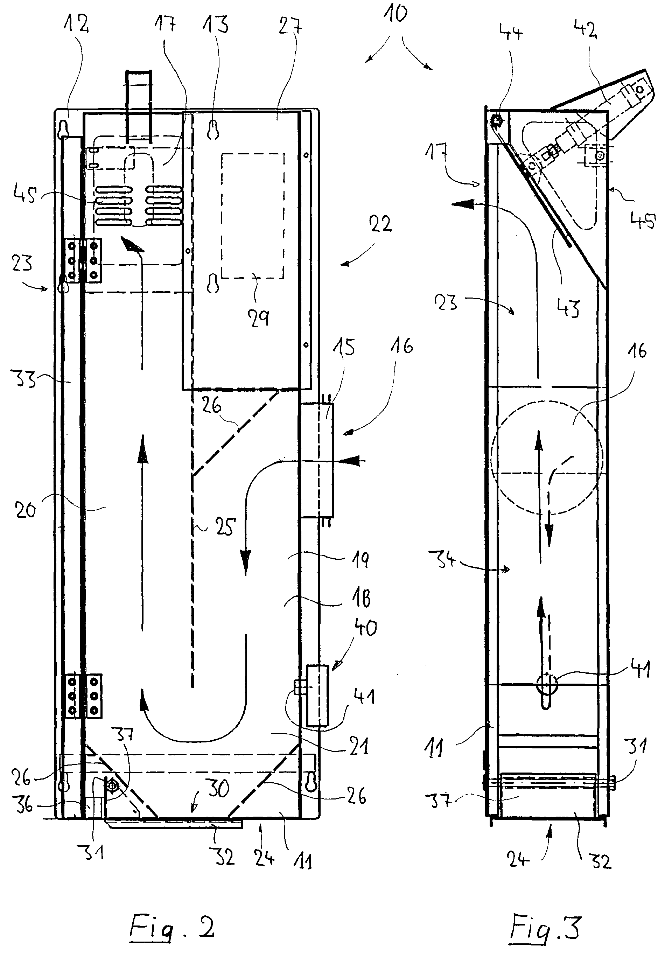

Im unteren Bereich des Ansaugkanales 18 ist zwischen den trichterförmig aufeinander zu laufenden Schrägblechen 26 eine rechtwinklige Bodenöffnung 30 gebildet, die durch eine um eine horizontale Schwenkachse 31 schwenkbare Bodenklappe 32 im wesentlichen luftdicht verschließbar ist. An der der Ansaugöffnung 16 abgewandten und in Fig. 1 gut zu erkennenden Schmalseite 23 der Brandschutzeinrichtung ist eine praktisch die gesamte Höhe der Brandschutzeinrichtung einnehmende Tür 33 vorgesehen, die im geschlossenen Zustand eine Wandung des Kanalabschnitts 20 des Absaugkanals bildet und eine praktisch die gesamte Höhe de Absaugkanals einnehmende, an einer Ecke abgeschrägte Öffnung 34 (Fig. 3) verschließt, die von einer umlaufenden Dichtung 35 umgeben ist. Die Tür 33 ist in Fig. 3 aus Darstellungsgründen weggelassen. Am unteren Ende der Tür ist ein nach innen gerichteter Betätigungsklotz 36 z. B. aus Hartgummi angebracht, der unterhalb der Schwenkachse 31 auf einen nach oben gerichteten Abschnitt 37 der Bodenklappe 32 derart einwirkt, daß die Bodenklappe bei Schließen der Tür 33 über dem Betätigungsklotz 36 automatisch geschlossen und bei Öffnen der Tür 33 sich schwerkraftunterstützt automatisch öffnet.

An der gegenüberliegenden Schmalseite 33 ist unterhalb der Ansaugöffnung 16 etwa auf Höhe der Unterkante des Zwischenbleches 25 ein Infrarotsensor 40 angebracht, dessen Sensorfenster 41 so in das Innere des Ansaugkanals 18 gerichtet ist, daß jeder von der Ansaugöffnung 16 durch den Umlenkbereich 21 zur Auslaßöffnung 17 getragene Partikel zwangsweise durch den Erfassungsbereich des Sensors geführt wird, wobei die meisten Partikel in der Regel zweimal diesen Erfassungsbereich passieren. Dadurch kann kein Staubpartikel vom Sensor unerkannt in den Entstauber gelangen.

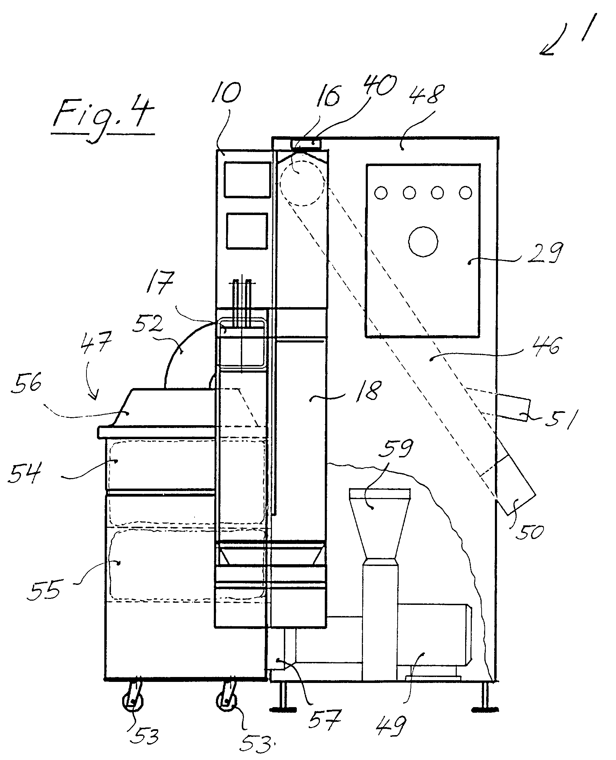

Alternativ kann der Sensor 40, wie in Fig. 4 gezeigt, am Eingang des Ansaugkanals 18 angeordnet und senkrecht nach unten in das Innere des Ansaugkanals 18 gerichtet sein. Wird mittels des Sensors 40 ein Funken detektiert hat die Verschlußklappe so lange Zeit zu schließen, bis der Funken durch den gesamten Ansaugkanal 18 bis hin zur Auslaßöffnung 17 gelangt ist. Der Funken muß also die maximale Wegstrecke im Ansaugkanal 18 zurücklegen. Dies minimiert das Risiko, daß doch ein Funken über die Auslaßöffnung in die Filtereinrichtung 47 gelangt.

Der Sensor 40 ist über nicht gezeigte Signalleitungen mit der Steuereinrichtung 29 verbunden, die wiederum einen Pneumatikzylinder 42 ansteuert, der auf eine Verschlußklappe 43 wirkt, die oberhalb der Auslaßöffnung 17 um eine horizontale Schwenkachse 44 schwenkbar gelagert ist. Das klappenartige Verschlußorgan 43 ist in der in Fig. 3 gezeigten Ruhestellung (bei zurückgezogenem Pneumatikzylinder) derart schräg zur Auslaßöffnung 17 angeordnet, daß die Verschlußklappe als Umlenk- und ggf. Prallblech für die durch den Kanalabschnitt 20 nach oben geführte und durch den Auslaß 17 abgesaugte Strömung wirken kann. An der Außenseite des den Pneumatikzylinder aufnehmenden Raumes sind Lüftungsschlitze 45 vorgesehen, die dafür sorgen, daß bei einer plötzlichen Bewegung der Verschlußklappe 43 aus der in Fig. 3 gezeigten Ruhestellung in Richtung Auslaßöffnung 17 kein diese Bewegung hemmender Unterdruck in diesem Raum entsteht.

Die als gesonderte Baueinheit vorliegende Brandschutzeinrichtung kann im Bedarfsfall schnell und einfach und ggf. ohne Zuhilfenahme von Werkzeugen an einem Entstauber angebracht werden, indem dessen Ansaugöffnung 8 ggf. durch Abschrauben eines aufgeschraubten Schlauchanschlußstutzens freigelegt und danach die Brandschutzeinrichtung an der der Ansaugöffnung aufweisenden Seite eingehängt wird. Das Nachrüsten der auch als Funkenerkennungsvorrichtung bezeichneten Brandschutzeinrichtung kann vom Endnutzer selbst vorgenommen wrden. Die Funkenerkennungsvorrichtung wird lediglich an den Entstauber eingehängt, ggf. angeschraubt und mittels einer geeigneten Steckverbindung elektrisch an diese angeschlossen. Ein zur Steuerung der Funkenerkennung benötigtes Softwareprogramm kann in der Steuerung des Entstaubers schon vorhanden sein. Außerdem ist noch der Pneumatikzylinder an eine Druckluftversorgung anzuschließen, die typische Arbeitsdrücke zwischen ca. 3 und ca. 6 bar bereitstellt. Damit ist die Funkenerkennung nach der elektrischen mechanischen Montage sofort voll funktionsfähig.

Im Saugbetrieb werden die von angeschlossenen Bearbeitungsmaschinen stammenden Stäube über an den Stutzen 15 angeschlossene Schläuche in die Brandschutzeinrichtung eingesaugt, durch den Ansaugkanal 18 geführt und gelangen nach Verlassen der Brandschutzeinrichtung durch die Ansaugöffnung 8 in das Innere des Entstaubers, wo sie aus der sie tragenden Luft herausgefiltert werden.

Insbesondere im Bereich der Schuhherstellung können die angesaugten Stäube auch angesaugte Funken bzw. glimmende oder glühende Partikel aufweisen. Das den Funken enthaltende Fördermaterial wird innerhalb der Funkenerkennung durch das durch den gekrümmten Ansaugkanal gebildete Labyrinth geführt, das so aufgebaut ist, daß kein Funke den optischen Sensor 40 unerkannt passieren kann. Der als Funkendetektor verwendete Infrarot-Sensor kann beispielsweise so ausgebildet sein, daß eingesaugte Funken mit Temperaturen von über ca. 400°C ein entsprechendes Gefahrensignal bzw. Funkensignal auslösen, das an die Steuereinrichtung 29 abgegeben wird. Als Antwort auf dieses eine Gefahrensituation anzeigende Signal wird der Pneumatikzylinder 42 derart angesteuert, daß er durch Verschwenken der Verschlußklappe 43 in Richtung Auslaßöffnung 17 diese und damit den Einlaß in den Entstauber schnell verschließt. Durch das schnelle Schließen der Schnellschlußklappe vor Durchtritt eines Funkens in den Entstauber kann ein Entzünden der im Sammelbehälter 6 und/oder im Bereich der Filterpatronen vorhandenen Stäube zuverlässig verhindert werden. Als Antwort auf ein Funkensignal wird außerdem der Ventilatormotor des Entstaubers abgeschaltet.

Durch das Versperren der Auslaßöffnung 17 bricht die Luft- und Materialströmung im Ansaugkanal 18 zusammen, so daß das danach im Ansaugkanal befindliche Material nach unten sinkt und im unteren Bereich durch die Schrägflächen 26 im Bereich der Bodenöffnung 30 sich auf der Bodenklappe 32 ansammelt. Die Steuerung ist nun so ausgelegt, daß ein Bediener nach einer Funkenerkennung die Revisionstüre 33 der Brandschutzeinrichtung zunächst öffnen muß. Dadurch wird die durch die Revisionstür 33 mittels des Blockes 36 im geschlossenen Zustand gehaltene und daher mit der Revisionstür 33 gekoppelte Bodenklappe 32 geöffnet, und das den Funken enthaltende Material wird ausgeworfen. Das Öffnen der Revisionstüre kann ebenfalls dazu genutzt werden, eine zusätzliche visuelle Funkenkontrolle des Ansaugkanals, insbesondere des Kanalabschnittes 20 und des Umlenkabschnittes 21 durchzuführen.
Eine erneute Inbetriebnahme des Entstaubers wird erst nach Öffnen und nachfolgendem Schließen der Revisionstüre 33 möglich, da dieser Vorgang über einen elektrischen Schalter überwacht wird, der mit der Steuereinrichtung 29 verbunden ist. Durch das Schließen der Türe 33 wird automatisch auch die Bodenklappe wieder in die in Fig. 2 gezeigte Verschlußstellung geschwenkt. Durch gleichzeitige Ansteuerung des Pneumatikzylinders 42 wird auch die Verschlußklappe 33 wieder geöffnet. Der Entstauber kann dann wieder in Betrieb genommen werden.

Die elektropneumatisch betätigbare Schnellschlußklappe ist besonders auf einen zuverlässigen Betrieb und insbesondere auf außerordentlich schnelle Schließzeiten optimiert. Bei ausgeschaltetem Entstauber hält der Pneumatikzylinder 42 die Absperrklappe geöffnet (Fig. 3). Um die Funktionsfähigkeit des Schnellverschlusses zu gewährleisten, wird automatisch überprüft, ob der typischerweise zwischen ca. 3 und 6 bar liegende Luftdruck am Zylinder 42 tatsächlich vorliegt. Ist dies nicht gewährleistet, so schaltet ein entsprechend angebrachter Druckschalter den Entstauber ab. Dieser kann also nur dann betrieben werden, wenn der Stellantrieb für den Verschluß der Schnellschlußklappe funktionsfähig ist.

Nach Erkennung eines Funkens mittels des Sensors 40 wird ein dem Pneumatikzylinder 42 zugeordnetes Magnetventil derart umgeschaltet, daß die Absperrklappe 43 nun durch den Pneumatikzylinder aktiv in Richtung der Sperrstellung gedrückt wird.

Die allein durch den Pneumatikzylinder erreichbare Schließgeschwindigkeit wird durch die vorteilhafte Ausgestaltung der Verschlußklappe 43 noch deutlich erhöht, da diese so angeordnet, ist, daß bei eingeschaltetem Entstauber die in Richtung Entstaubereingang 8 strömende Strömung und die in diesem Bereich herrschenden Druckunterschiede die Schließbewegung der Klappe 43 aktiv unterstützen. Bei eingeschaltetem Entstauber herrscht im Ansaugkanal 18 ein Unterdruck gegenüber dem Umgebungsdruck, der dank der Luftschlitze 45 auf der dem Ansaugkanal abgewandten Rückseite der Absperrklappe 43 lastet. Die Zugkraft des Pneumatikzylinders ist in diesem Stadium ausreichend, die Klappe 43 dennoch in der anschalgbegrenzten Öffnungsstellung (Fig. 3) zu halten. Der auf die Absperrklappe wirkende Differenzdruck führt beim Schließen der Klappe zu einer starken Beschleunigung in Richtung Schließstellung. Durch das Einschwenken der Absperrklappe in den im Absaugkanal strömenden Volumenstrom wird dann die Impulskraft der Volumenstromsäule im Ansaugkanal zusätzlich zur Schließbeschleunigung genutzt. Die hohe Strömungsgeschwindigkeit von typischerweise mehr als 20 m/s führt zu einer weiteren Beschleunigung der Absperrklappe. Außerdem saugt der Unterdruck, der durch den zwar abgeschalteten, aber noch nachlaufenden Ventilator erzeugt wird, die Absperrklappe zusätzlich Richtung Auslaßöffnung 17 bzw. Ansaugöffnung 8 an. Diese drei Faktoren (Differenzdruck, Impulskraft und Saugkraft des Ventilators) werden durch die vorteilhafte Ausgestaltung der Verschließmechanik zur Erzielung einer hohen Schließgeschwindigkeit der Absperrklappe genutzt. Diese kann im Bereich von weniger als 0,1 Sekunden liegen, beispielsweise bei ca. 0,08 Sekunden, was in jedem Fall für einen zuverlässigen Verschluß des Entstaubereingangs ausreicht, bevor ein dem Verschließvorgang auslösender Funken aus dem Bereich des Sensors 40 bis in den Bereich des Verschließmechanismus gelangt.

In Fig. 4 ist eine zweite Ausführungsform des erfindungsgemäßen Entstaubers 1 dargestellt. Diese Ausführungsform umfaßt eine Absaugleitung 46 zum Ab- bzw. Ansaugen von staubhaltiger Luft, eine Brandschutzeinrichtung 10, eine Filtereinrichtung 47 und eine Ventilatoreinheit 48 mit zugehörigem Ventilator 49.

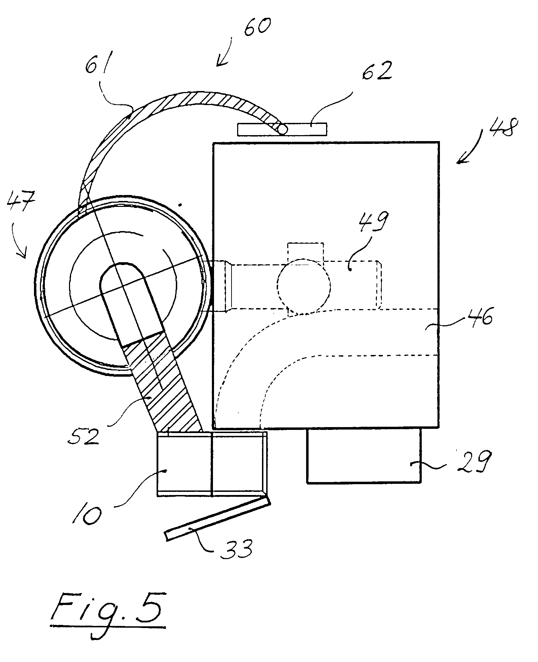

Die Absaugleitung 46 ist ein schräg nach unten gerichtetes Absaugrohr, das durch das Gehäuse der Ventilatoreinheit 48 verläuft und an dessen Absaugende zwei Absaugstutzen 50, 51 mit ggf. unterschiedlichem Durchmesser angebracht sind. Die Absaugstutzen 50, 51 können direkt an einen staubhaltige Luft erzeugenden Arbeitsbereich herangeführt werden. Es ist auch möglich, einen flexiblen Schlauch auf die Absaugstutzen aufzustecken, der dann in eine beliebige Absaugposition gebracht werden kann. Das Absaugrohr besitzt eine glatte Innenwandung, ohne Rillen oder Kanten, wie beispielsweise bei Wickelfalzrohren, so daß sich im Absaugrohr keine Staubpartikel o. dgl. ablagern können. Zusätzlich wird das Ablagern von Staub noch durch die Schräge des Absaugrohres verhindert. Das Rohr 46 verläuft vorzugsweise relativ steil, z. B. in einem Winkel von 45° oder weniger zur Vertikalrichtung. Partikel, die auf die Innenwandung des Absaugrohres fallen, werden also nicht in die Brandschutzeinrichtung befördert, sondern rutschen zum Absaugende des Rohres herunter, wo sie ggf. noch einmal aufgewirbelt und richtig angesaugt werden. Um das Anbacken von glimmenden bzw. glühenden Partikeln zu verhindern, ist die Innenwandung des Absaugrohres feuerbeständig ausgebildet, beispielsweise kann dies durch ein Verzinken des Absaugrohres erreicht werden. Das Absaugrohr mündet mit einer 90°-Krümmung an seinem dem Absaugende gegenüberliegenden Ende in die Ansaugöffnung der Brandschutzeinrichtung 10 (Fig. 5).

Die Brandschutzeinrichtung 10 ist bei der zweiten Ausführungsform des Entstaubers 1 ein separates Bauteil, das seitlich an der Ventilatoreinheit 48 lösbar befestigt ist. Wird staubhaltige Luft ohne Funkenrisiko abgesaugt, könnte die Brandschutzeinrichtung abgenommen und die Absaugleitung 46 direkt mit einer Saugleitung 52 am oberen Ende der Filtereinrichtung 47 verbunden werden. Bezüglich Details über die Bauform und Funktionsweise der Brandschutzeinrichtung wird auf die vorhergehende Beschreibung verwiesen, da sich die Brandschutzeinrichtung in Funktion und Aufbau nur unwesentlich von der oben beschriebenen Ausführungsform unterscheidet.

Die Auslaßöffnung 17 der Brandschutzeinrichtung 10, die über die Verschlußklappe der Brandschutzeinrichtung 10 verschließbar ist, mündet in die Saugleitung 52 am oberen Ende der Filtereinrichtung. Die Saugleitung 52 ist ein kurzer, gekrümmter Rohrabschnitt aus Wickelfalz oder anderen, ggf. flexiblen, Materialien.

Die Filtereinrichtung 47 ist ebenfalls ein separates Bauteil und als eine Art Filtertonne ausgebildet. Die Filtertonne besitzt an ihrer Unterseite Rollen 53, durch die sie in verschiedene Positionen gefahren und ggf. aus dem Weg gestellt werden kann. Auch ist dadurch möglich, die Filtertonne an einer beliebigen Brandschutzeinrichtung 10 anzuschließen. Die Filtertonne besitzt zwei verschiedenartige Filter, nämlich einen Oberflächenfilter 54 zur Filterung von Staub und eventuell enthaltenen Kleberresten und einen Tiefenfilter 55 zur Filterung von Dämpfen. Die Saugleitung 52 ist mit dem Oberflächenfilter verbunden, der als Wegwerfpapierfilterbeutel 54 nach Art eines Staubsaugerbeutels ausgebildet ist. Wenn der Filterbeutel voll ist, wird der Deckel 56 der Filtertonne aufgeklappt, der Filterbeutel herausgenommen und mitsamt dem Staub entsorgt. Damit spart man sich eine aufwendige Abreinigung des Filters. Dem Oberflächenfilter nachgeschaltet ist ein Tiefenfilter, der als Filtersack 55 ausgebildet ist. Der Filtersack 55 besteht aus Baumwolle oder einer Baumwoll-Polyacryl-Mischung. Durch den Filtersack 55 wird ein Großteil der Dämpfe herausgefiltert. Hierdurch wird eine enorme Minderung der Geruchsbelastung erreicht. Ein vollgetränkter Filtersack kann ebenfalls in einfacher Weise aus der Filtertonne herausgenommen und entsorgt werden.

Seitlich im Bereich der Unterseite der Filtertonne ist ein kurzer Anschlußstutzen 57 angebracht, über den die gereinigte Luft in die Ventilatoreinheit 48 strömt. Die Luft wird über einen als Radiallüfter ausgebildeten Vakuumerzeuger 49 angesaugt und über einen nach oben gerichteten Ausblasstutzen 59 in den Innenraum der komplett schallisolierten Ventilatoreinheit 48 ausgeblasen. Die Lärmbelästigung durch den Radiallüfter ist also minimal. Von der Ventilatoreinheit 48 gelangt die gereinigte Luft über Auslaßschlitze (nicht dargestellt) in die Umgebung.

Wie in Fig. 5 dargestellt, befindet sich seitlich an der Filtertonne eine Reinigungsvorrichtung 60 zur Reinigung von Arbeitsbereichen. Die Reinigungsvorrichtung hat einen Schlauch 61, der über ein Klappenventil in die Filtertonne gesteckt werden kann. Am der Filtertonne abgewandten Ende des Schlauches 61 befindet sich eine Flächenreinigungsdüse 62, die auf den Schlauch aufsteckbar ist. Mit Hilfe der Flächenreinigungsdüse können Arbeitsbereiche nachträglich großflächig gereinigt werden. Die verfahrbare Filtertonne, der Schlauch 61 und die Düse 62 bilden dabei eine Art Staubsauger, und der abgesaugte Staub gelangt direkt in den Filterbeutel 54 der Filtertonne.

Die Erfindung ermöglicht also ohne den Einsatz von Löschmitteln, wie Wasser, eine zuverlässige Vermeidung von Filterbränden und damit einhergehenden Produktionsstillständen, insbesondere im Bereich der Lederwaren- und Schuhproduktion. Durch ihre kompakten Ausmaße sind Entstauber der gezeigten Art hervorragend auch für die Aufstellung in kleinsten Räumen geeignet, beispielsweise in beengten Dentallabors. Durch die differenzdruckgesteuerte automatische Abreinigung der Filterelemente bzw. die Bestückung mit austauschbaren Wegwerffilterbeuteln bzw. Filtersäcken arbeiten derartige Entstauber wartungsarm. Von besonderem sicherungstechnischen Vorteil ist die mit einem optischen Infrarotsensor ausgerüstete, trocken arbeitende Funkenerkennungsanlage, die dafür sorgt, daß kein Funke unerkannt eingesaugt werden und einen Brand im Entstauber auslösen könnte. Wird ein Funke erkannt, so verschließt der Schnellverschluß den Verbindungsstutzen zum Entstauber, die Luftzufuhr wird unterbrochen, und der Ventilator wird abgeschaltet. Durch Öffnen der Revisionsklappe öffnet sich auch die Bodenklappe, so daß der gefährliche Funke aus dem Ansaugbereich ausgetragen wird. Als Zusatzeinrichtung können Temperaturfühler für den Filterraum sowie eine in das System integrierte, vollautomatische Löschvorrichtung vorgesehen sein, die als Antwort auf ein entsprechendes Funkensignal der Sensoreinheit eine Löschung des funkengefährdeten Bereiches vornimmt.

## Patentansprüche

1. Entstauber, insbesondere Entstauber zur Absaugung von Problemstäuben in der Schuhindustrie, mit mindestens einer Eingangsöffnung zur Absaugung von staubhaltiger Luft, mindestens einer Saugeinrichtung zur Erzeugung eines Unterdrucks an der Eingangsöffnung des Entstaubers, mindestens einer Filtereinrichtung zur Reinigung der angesaugten staubhaltigen Luft und mindestens einer Ausblasöffnung zum Ausblasen gereinigter Luft, **gekennzeichnet durch** eine Brandschutzeinrichtung (10) mit mindestens einer Ansaugöffnung (16), von der mindestens ein Ansaugkanal (18) zu mindestens einer Auslaßöffnung (17) führt, mit mindestens einem dem Ansaugkanal (18) zugeordneten Sensor (40) zur Erfassung der Beschaffenheit der durch den Ansaugkanal geführten staubhaltigen Luft und zur Abgabe eines Gefahrensignals sowie einer mit dem Sensor signalleitend verbundenen Steuereinrichtung (29) zur Einleitung einer trockenen Brandschutzmaßnahme als Antwort auf ein Gefahrensignal.

2. Entstauber nach Anspruch 1, **dadurch gekennzeichnet, daß** die Brandschutzeinrichtung als gesonderte Baueinheit (10) ausgebildet ist, die derart an dem Entstauber (1) anbringbar ist, daß die Auslaßöffnung (17) der Brandschutzeinrichtung mit einer Eingangsöffnung (8) des Entstaubers kommuniziert, wobei die Brandschutzeinrichtung vorzugsweise lösbar, insbesondere durch Anschrauben und/oder Einhängen, an dem Entstauber anbringbar ist.

3. Entstauber nach Anspruch 1 oder 2, **dadurch gekennzeichnet, daß** der Sensor mindestens einen in den Ansaugkanal gerichteten optischen Sensor (40) aufweist, insbesondere einen Infrarotsensor, wobei vorzugsweise der Sensor (40) derart angeordnet ist, daß ein räumlicher Erfassungsbereich des Sensors im wesentlichen den gesamten Durchlaßquerschnitt des Absaugkanals (18) erfaßt.

4. Entstauber nach einem der vorhergehenden Ansprüche, **dadurch gekennzeichnet, daß** der Ansaugkanal (18) der Brandschutzeinrichtung derart mindestens abschnittsweise gekrümmt ausgebildet ist, daß er eine Absaugkanallänge hat, die deutlich größer ist als ein direkter Abstand zwischen Ansaugöffnung (16) und Auslaßöffnung (17), wobei die Absaugkanallänge vorzugsweise mehr als zweimal, insbesondere zwischen zweimal und fünfmal so groß ist wie der Abstand, wobei vorzugsweise der Absaugkanal (18) labyrinthartig gekrümmt und insbesondere im wesentlichen U-förmig ausgebildet ist.

5. Entstauber nach einem der vorhergehenden Ansprüche, **dadurch gekennzeichnet, daß** mindestens ein Verschlußorgan (43) für den Absaugkanal (18) der Brandschutzeinrichtung vorgesehen ist, das mittels der Steuereinrichtung (29) derart ansteuerbar ist, daß der Absaugkanal (18) als Antwort auf ein Gefahrensignal automatisch verschließbar ist.

6. Entstauber nach Anspruch 5, **dadurch gekennzeichnet, daß** das Verschlußorgan (43) stromabwärts des Sensors (40), vorzugsweise im Bereich der Auslaßöffnung (17) angeordnet ist, wobei vorzugsweise ein entlang des Absaugkanals gemessener Abstand zwischen dem Sensor (40) und dem Verschlußorgan und eine zur Absperrrung des Absaugkanals durch das Verschlußorgan erforderliche Verschließzeit, die vorzugsweise weniger als 0,2 Sekunden, insbesondere weniger als 0,1 Sekunden beträgt, an eine mittlere Strömungsgeschwindigkeit im Absaugkanal derart angepaßt sind, daß der Absaugkanal verschließbar ist, bevor ein den Verschließvorgang auslösender Funken o. dgl. das Verschlußorgan erreicht.

7. Entstauber nach einem der Ansprüche 5 oder 6, **dadurch gekennzeichnet, daß** das Verschlußorgan als Verschlußklappe (43) ausgebildet ist, die vorzugsweise derart angeordnet ist, daß eine Schließbewegung der Verschlußklappe durch die Strömung im Absaugkanal (18) und/oder durch einen an der Verschlußklappe auftretenden Differenzdruck zwischen dem Inneren des Absaugkanals (18) und der Umgebung der Brandschutzeinrichtung beschleunigbar ist, und/oder daß die Brandschutzeinrichtung ein durch die Steuereinrichtung (29) in Abhängigkeit von dem Sensorsignal ansteuerbarer, vorzugsweise pneumatischer Verschließantrieb (42) für das Verschlußorgan (43) aufweist.

8. Entstauber nach einem der vorhergehenden Ansprüche, **dadurch gekennzeichnet, daß** die Steuereinrichtung (29) derart mit einer Saugeinrichtung des Entstaubers (1) zusammenwirkt, daß die Saugeinrichtung bei Auftreten eines Gefahrensignals abschaltbar ist.

9. Entstauber nach einem der vorhergehenden Ansprüche, **dadurch gekennzeichnet, daß** bei der Brandschutzeinrichtung in einem unten anordenbaren Bodenbereich des Absaugkanals (18) eine verschließbare Bodenöffnung (30) zur Entnahme von Fördergut aus dem Absaugkanal vorgesehen ist, wobei die Bodenöffnung vorzugsweise durch eine Bodenklappe (32) verschließbar ist.

10. Entstauber nach einem der vorhergehenden Ansprüche, **dadurch gekennzeichnet, daß** der Absaugkanal der Brandschutzeinrichtung, insbesondere zur optischen Inspektion, werkzeuglos öffenbar ist, wobei vorzugsweise mindestens eine abdichtend verschließbare Tür (33) vorgesehen ist, die im geschlossenen Zustand eine Begrenzung eines Abschnitts (20) des Absaugkanals bildet und vorzugsweise mit der Bodenklappe (32) derart gekoppelt ist, daß bei Öffnung der Tür die Bodenklappe selbsttätig zur Freigabe von Fördergut öffnet und sich bei Schließen der Tür schließt.

11. Entstauber nach einem der vorhergehenden Ansprüche, **dadurch gekennzeichnet, daß** in seine Eingangsöffnung eine schräg nach unten gerichtete Absaugleitung (46) mündet, wobei die Absaugleitung vorzugsweise ein Absaugrohr mit einer Innenwandung mit geringer Halte- oder Haftfähigkeit für Staub und/oder glühende Partikel ist.

12. Entstauber nach einem der vorhergehenden Ansprüche, **dadurch gekennzeichnet, daß** die Filtereinrichtung (47) zur Filterung von Staub und, vorzugsweise geruchsbelastenden, Dämpfen ausgebildet ist, wobei vorzugsweise zur Filterung von Staub mindestens ein auf Staub optimierter Filter, insbesondere ein Oberflächenfilter, und zur Filterung von Dämpfen mindestens ein davon gesonderter, auf Dämpfe optimierter Filter, insbesondere ein Tiefenfilter, vorgesehen ist, wobei insbesondere zur Filterung von Staub mindestens ein Filterbeutel (54) oder mindestens eine Filterpatrone und zur Filterung von Dämpfen mindestens ein Filtersack (55) vorgesehen ist und/oder wobei der auf Staub optimierte Filter und/oder der auf Dämpfe optimierte Filter auswechselbar ist.

13. Entstauber nach einem der vorhergehenden Ansprüche, **dadurch gekennzeichnet, daß** dem Entstauber eine Reinigungsvorrichtung (60) zugeordnet ist, die zur lösbaren Befestigung am Entstauber, insbesondere an der Filtereinrichtung (47) ausgebildet ist, wobei die Reinigungseinrichtung vorzugsweise mindestens eine Flächenreinigungsdüse (62) aufweist.

14. Brandschutzeinrichtung für Entstauber, insbesondere für Entstauber zur Absaugung von Problemstäuben in der Schuhindustrie, die Brandschutzeinrichtung (10) mit mindestens einer Ansaugöffnung (16), von der mindestens ein Ansaugkanal (18) zu mindestens einer Auslaßöffnung (17) führt, mit mindestens einem dem Ansaugkanal (18) zugeordneten Sensor (40) zur Erfassung der Beschaffenheit des durch den Ansaugkanal geführten Fördergutes und zur Abgabe eines Gefahrensignals sowie einer mit dem Sensor signalleitend verbundenen Steuereinrichtung (29) zur Einleitung einer trockenen Brandschutzmaßnahme als Antwort auf ein Gefahrensignal.

15. Brandschutzeinrichtung nach Anspruch 14, **gekennzeichnet durch** die Merkmale des kennzeichnenden Teils von mindestens einem der Ansprüche 2 bis 11.
